Europäisches Patentamt

European Patent Office

Office européen des brevets

(11) Publication number: **0 202 364**
**A1**

(12) **EUROPEAN PATENT APPLICATION**

(21) Application number: **85200834.1**

(22) Date of filing: **24.05.85**

(51) Int. Cl.⁴: **B 01 J 20/28**
**C 22 B 3/00, C 02 F 1/28**
**B 01 J 47/00**

(43) Date of publication of application:
**26.11.86 Bulletin 86/48**

(84) Designated Contracting States:
**AT BE CH DE FR GB IT LI LU NL SE**

(71) Applicant: **AGFA-GEVAERT naamloze vennootschap**
**Septestraat 27**
**B-2510 Mortsel(BE)**

(72) Inventor: **De Rycke, Gino Luc**
**Grootveldlaan 326**
**B-1150 St. Pieters-Woluwe(BE)**

(54) Process and apparatus for the removal of dissolved substances from aqueous liquids.

� 57 A substance present in dissolved form in an aqueous liquid is removed by causing the liquid to flow along the surface of at least one element in the form of a sheet or web which incorporates a scavenging agent with which said substance forms a water-insoluble reaction product. The process can be used for example for recovering from solution a heavy metal such as silver. In a particular embodiment a solution used in processing photographic silver halide material is pumped into a column (12) containing a spirally wound web (13) carrying silver scavenging layers. The scavenging layers comprise zinc sulphide or some other silver scavenging agent distributed in a water-permeable binder. The silver-containing solution flows between the convolutions of the spirally coiled web, in contact with the scavenging layer.

EP 0 202 364 A1

0202364

# DESCRIPTION

The present invention relates to a process for removing a substance from an aqueous liquid in which it is present in dissolved form, by flowing such liquid in contact with a scavenging agent with which said substance forms a water-insoluble reaction product.

The removal of dissolved substances from liquids is practised for various reasons e.g. because of the value of the dissolved substances or their toxicity. In that connection there is much interest in the treatment of aqueous effluents for the separation or recovery of noble metals and the scavenging of metal ions, e.g. heavy metal ions (atomic number above 55) which under official control regulations cannot be introduced into the environment in concentrations above certain limits.

For example, the recovery of silver from aqueous solutions, e.g. solutions recovered from the processing of photographic silver halide emulsion materials is not only of economic interest but is also a demand imposed by state regulations pertaining to the environment.

There exist already many techniques for silver recovery from photographic processing liquids. A survey of these is given e.g. by Günter Kolf in the publication: "Silber-Recycling aus fotografische Lösungen : Eine Übersicht über die Verfahren", - Chemie für Labor und Betrieb, 32 - 2 (1981) p. 43-48.

In the recovery of silver from aqueous liquids containing silver in dissolved form the following techniques have been applied:

1)   reduction of the dissolved silver compounds to metallic silver by less noble metal, so-called metal replacement,

2)   reduction of dissolved silver compounds to silver metal by means of a dissolved organic or inorganic reducing agent,

3)   electrolytic reduction,

4)   chemical precipitation in the form of insoluble silver salts,

5)   chemical binding to ion-exchange resins,

6)   dialysis or reversed osmosis using special membranes, e.g. ion-exchange membranes to concentrate the dissolved silver salts.

The recovery of silver from fixing and bleach-fixing liquids containing dissolved silver complex compounds is usually performed by metallic replacement using iron in the form of steel wool or by electrolysis.

The recovery of silver from aqueous rinsing liquids which contain the silver in very diluted form is usually effected by means of ion-exchange resins.

From an economic standpoint the recovery of silver from spent fixing liquids is of particular importance, whereas the removal of silver from rinsing liquids, so-called wash water effluents, is more a problem of complying with regulations restricting the noble metal content of liquids which are to be drained to the sewer.

As stated in the above mentioned publication, for the chemical precipitation of dissolved silver from fixing solutions, the only suitable reagents are those which are capable of forming insoluble silver salts by reaction with silver complexes such as silver thiosulphate complexes. A common reagent for that purpose is sodium sulphide by means of which silver sulphide is formed.

Sodium sulphide resulting in a quantitative precipitation of the silver as silver sulphide cannot be used as a constituent of the fixing liquid since the sulphide ions would reach the silver ions still present in the photographic material and spoil the image. Moreover, colloidal silver sulphide formed in the processing liquids would gradually agglomerate and smudge the photographic material by direct deposition or take up from conveying rollers.

The use of ion-exchange resin pellets or granules for scavenging the silver contained in aqueous rinsing liquids following the fixing of gelatin-silver halide emulsion layers is not without problems. Indeed, as described e.g. by Robert T. Kreiman in Journal of Imaging Technology, Vol. 10, Number 6, Dec. 1984 - p. 244, when cascading photographic wash water through a resin column, a combination of gelatin and bacterial slime will gradually plug the column causing a build-up of back pressure. Eventually this will either stall the pump or force a channel through the resin through which the water can pass so that it is no longer distributed through the resin bed as required for ion-exchange. The problem of clogging the interstices between the granular ion-exchange particles is particulary liable to occur in wash-off processing systems wherein colloidal binder enters the wash water together with undeveloped and possibly complexed silver salts and that wash water has then to be freed from silver. Wash-off processing occurs, e.g. following tanning development of gelatin-silver halide emulsion layers as described e.g. in GB-P 812,673 and 1,231,194 or following degradation of gelatin by the intermediary of a developed silver image as described e.g. in US-P 4,203,765.

In US-P 3,179,517 a method of simultaneously developing and fixing an exposed photographic silver halide emulsion is described wherein use is made of a processing web composed so that complexed silver becomes precipitated in the web. The web contains a silver halide solvent and a silver-precipitating agent and is brought into intimate contact with the exposed silver halide emulsion layer in the presence of an aqueous liquid and a photographic silver halide developing agent, which may be incorporated in the said emulsion layer or in the web before their contact. The processing web is maintained in intimate contact with the silver halide emulsion layer until development of the latent image is substantially complete and substantially all of the undeveloped silver has been cleared from the emulsion layer by the silver halide solvent and deposited in the processing web by the silver precipitating agent. Precipitating agents for the purpose of that processing method are either nuclei or development centers on which silver from soluble silver halide complex compounds can be precipitated as metallic silver by physical development, or compounds which react with the silver of the soluble silver halide complex compounds to form an insoluble silver compound. The said method is more particularly intended for processing rolls of film material and it is not convenient for use with large format films such as X-ray and graphic art films; moreover it requires a rather long contact time, generally about 4 to 10 minutes.

It is an object of the present invention to provide a very convenient and effective process for the continuous removal of a substance, e.g. metal ions, from a flowing aqueous liquid in which such substance is present in dissolved form, using a scavenging agent which fixes such substance in a water-insoluble state without problems with regard to blockage of the liquid flow.

It is a particular object of the present invention to provide a very convenient and effective process for the removal of dissolved silver from aqueous liquids, e.g. fixing solutions and wash liquids used in silver halide photography.

Another particular object of the invention is to provide a process by which silver can be recovered from aqueous liquids used for washing of fixed photogaphic silver halide emulsion materials and by which the silver content of the liquid thereby can be reduced to a level which is tolerable in sewerage under various state environmental control regulations.

It is yet another particular object of the present invention to provide a process for the recovery of silver from a fixing solution containing silver complex compounds and thereby rejuvenate the solution for recycling.

Other objects and advantages of the present invention will become clear from the further description.

According to the present invention there is provided a process for removing a substance from an aqueous liquid in which it is present in dissolved form, by flowing such liquid in contact with a scavenging agent with which said substance forms a water-insoluble reaction product, characterised in that there is provided at least one element consisting of or comprising at least one self-sustaining or supported layer (hereafter called "scavenging layer") along which said scavenging agent is distributed, and said liquid is caused to stream along at least one surface of such layer.

By this process silver or some other substance can be conveniently removed in a continuous manner from a flowing aqueous liquid in which such substance is present in dissolved form. The process can be performed with relative freedom from the problems of blockage which are encountered for example when flowing liquid through a column of ion exchange pellets or granules. The process is very well suited for use in recovering silver from spent fixing and washing liquids used in the processing of exposed silver halide photographic materials. The one or more elements providing the scavenging layer(s) can be installed in a closed circuit with the photographic processing apparatus so that spent or contaminated liquid from such apparatus is recycled following reduction of the silver content of the liquid.

In certain embodiments of the invention, use is made of at least one said element comprising a said scavenging layer carried by a supporting substrate in the form of a sheet, web or screen. Elements having various scavenging agents can be easily fabricated in that form. Examples of very suitable supporting substrate materials are fabric and paper. A paper substrate can if desired be coated, e.g. with a polyethylene or other water-impermeable coating. Other advantageous substrate materials are film-forming resins. For example the supporting substrate can be a polyethylene terephthalate support as used in the production of photographic silver halide emulsion layer materials. The term "web" denotes an elongate coilable substrate of any width.

Advantageously, use is made of at least one said element comprising a said scavenging layer or layers carried by a supporting substrate in the form of a sheet or web which can be burned without leaving ashes. An example of such an element is one comprising a paper substrate carrying a scavenging layer comprising an organic silver ion scavenging polymer dispersed in powder form in a water-absorbing hydrophilic binder. From such an element silver can be separated by incineration without interference by the material of the substrate.

Preferably use is made of at least one said scavenging layer comprising a water-permeable binder in which scavenging agent is distributed. Such layers can be readily formed to incorporate any required amount of dispersed scavenging agent particles per unit area of the layer. It is particularly advantageous to make use of one or more said elements comprising a layer or layers of that form on a supporting substrate. After the scavenging layer or layers has or have become loaded with the silver or other scavenged substance the said layer or layers can be washed away from the support and this can be re-coated with (a) fresh scavenging layer or layers. A said water-permeable layer containing the scavenging agent can be applied, e.g. by dipping, onto a supporting substrate in the form of a screen, e.g. a metal wire grid, wherefrom said layer can ready be washed away by mans of hot water under pressure after the layer has become loaded to it saturation capacity with the scavenged silver or other scavenged substance.

A particularly useful procedure for forming a scavenging layer comprising an inorganic sulphide in a layer of a water-absorbent medium, comprises first impregnating a layer of water-absorbent medium with a water-soluble metal salt capable of forming a sulphide having a poor water-solubility, subsequently wetting said layer with a water-soluble sulphide, e.g. sodium sulphide to precipitate the sparingly soluble sulphide inside the layer, and then removing all non-precipitated sulphide from the layer by washing with plain water. After the impregnation with the first said water-soluble metal salt and before wetting the layer with the water-soluble sulphide, the layer can be dried. According to another possible procedure, a water-absorbing binding agent, e.g. gelatin, is dissolved in a solvent, preferably water, and the inorganic sulphide is dispersed therein. Then the resulting dispersion is coated on a supporting substrate in the form of a sheet, web or screen and the dispersion is dried thereon to form the water-absorbent scavenging layer. This layer can be hardened or cross-linked to reduce its water-solubility.

Suitable binders for use in a said binder-type layer comprise hydrated silica, e.g. hydrated colloidal silica having an average grain size of 0.025 micrometer, regenerated cellulose, hydrolysed cellulose triacetate, cellulose ether phthalate, gelatin or polyvinyl alcohol. Any of these binders is optionally mixed with copolymer latex particles including hydrophilic recurring units, e.g. acrylic acid.

In other embodiments of the process according to the invention, use is made of at least one said element comprising at least one said scavenging layer wherein the scavenging agent is in granular or powder form and is secured to a substrate by means of a water-resistant bonding agent. As bonding agent, different known types of glue or adhesive can be used. For example, use can be made of a melt or solvent-type adhesive. Examples of melt adhesive are copolymers of ethylene and vinyl acetate, polyamides and polyesters. Examples of solvent adhesives are polyvinyl esters and synthetic rubber. Elements of such adherent scavenging agent have the scavenging agent granules or powder protruding from the bonding medium so as to be well exposed to the liquid flow along the surface of the layer.

The invention includes processes wherein use is made of at least one said element comprising two scavenging layers which are carried on opposite sides of a supporting substrate and liquid is caused to stream along the exposed surfaces of both such scavenging layers. A high scavenging capacity per unit area of element can thereby be achieved.

The process is very suitable for removing a heavy metal having an atomic weight above 55 from an aqueous liquid in which such metal is present in dissolved form. A very important use for the invention is in the removal of silver. For silver recovery it is in practice appropriate to employ scavenging agent in an amount corresponding to a silver ion scavenging capacity of at least 0.1 g per m2. Depending on the type of scavenging agent and the form of the scavenging layer, the silver ion capturing capacity can be in the range of 0.1 to 500 g of silver per m2. For example, in a preferred embodiment zinc sulphide is used in a water-permeable binder at a coverage in the range 1 to 10 g per m2.

The scavenging agent can be used in the form of powder particles or colloidal particles e.g. with a size in the range of e.g. 10 micrometer to 10 nanometer.

Suitable inorganic scavenging agents, especially for the scavenging of silver ions, are: sulphides, polysulphides, selenides and polyselenides, having a poor water-solubility, by which is meant that they have a lower solubility product than silver chloride in water in the temperature range of 5 to 25°C, but a higher solubility product than silver sulphide in water in said temperature range. The solubility products of metal sulphides and of silver chloride in said temperature range are mentioned in the Handbook of Chemistry and Physics, Editor in chief Charles D. Hodgman, 42nd Ed. - published by The Chemical Rubber Publishing Co. 2301 Superior Ave. N.E. Cleveland, Ohio (1960) p. 1746-1747. A preferred sulphide is zinc sulphide.

In the recovery of silver from photographic processing liqüids which are to be recycled, the use of an inorganic metal sulphide that gradually sets free sulphide ions such as zinc sulphide has no deleterious influence on the sensitometric properties of a photographic material since the sulphide ions react immediately with the silver compounds present in the fixing or wash liquid and remain as silver sulphide attached to the scavenging element(s).

Suitable organic scavenging agents for use in carrying out the invention are hydrophilic but water-insoluble non-diffusing polymers containing thiol or thiourea groups, e.g. polyvinyl mercapto-acetate and phenylthiourea resins having a high affinity towards silver ions. As described in Photographic Science and Engineering Vol. 17, Number 3 May/June 1973, pp. 282-284 relating to the rejuvenation of spent photographic fix by selective resins, phenylthiourea resins are used as silver ion scavenging agents in non-fixed granular form in techniques analogous to those applied for ion-exchange resins. Non-diffusing polyvinyl mercapto-acetate has been described as silver precipitant for use in the web processing method of the already mentioned US-P 3,179,517.

The one or more elements used in the process can be arranged in a flow-through passageway, e.g. column, through which the liquid to be treated is pumped to cause the liquid to stream along the scavenging layer(s) of such element(s).

The element or elements is or are preferably arranged to define a flow layer passageway or passageways along which the aqueous liquid streams in contact with the scavenging layer(s). In order to provide as large a contact area as possible within a given volume, while avoiding problems caused by blocking or clogging, it is preferable for the element or elements to be arranged to define for the liquid to be treated a flow layer passageway or passageways not shallower than 0.1 mm and preferably in the range 0.1 to 5 mm.

Preferably there is a said element which forms a spiral with spaced convolutions and the aqueous liquid is flowed along a passageway or passageways between such convolutions. In order to keep neighbouring convolutions at a small distance from each other small spacers within the spiral or a corrugated structure can be provided to preserve a flow layer passage or interspace, e.g. of 0.1 to 5 mm in depth, between the neighbouring convolutions. Preferably the spiral is arranged in a cylindrical column through which the liquid to be treated is pumped.

In a particular embodiment of the invention, using a spirally coiled element, the liquid to be treated is fed into the center of the coil and flows outwardly along the spiral passageway to an outlet at the periphery of the spiral. In that case the convolutions of the coil are pushed apart by the liquid so that there is no need for spacers or a corrugated structure.

According to another embodiment, a pack or stack of undulating elements is arranged in a rectangular column. The pack incorporates spacers or projections to allow the free flow of liquid between neighbouring elements.

By the element arrangements used in the above described embodiments, treatment of a photographic processing liquid containing gelatin can be performed at a high silver recovery rate without interruption due to clogging of the flow passageway(s).

In a particular embodiment of the invention a photographic fixing liquid is rejuvenated using scavenging elements arranged in a vessel, e.g. a column, which is connected into a closed circuit including the fixing tray or tank of the photogaphic processing apparatus. The elements comprise a silver ion scavenging agent such as a sulphide or a polymer containing thiol or thiourea groups as herebefore referred to, which sets free thiosulphate ions.

In another particular embodiment an aqueous photographic wash liquid is continuously desilvered using scavenging elements arranged in a passageway, e.g. a column, which is connected into a closed circuit including a tank for collecting the wash liquid in the photographic processing apparatus.

Although in the preceding description reference has been made more particularly to use of the process for scavenging silver ions, the described procedures can equally well be applied for removing other substances from aqueous liquids in which they are present in dissolved form, e.g. for scavenging a noble metal such as gold and toxic heavy metals such as mercury and lead the ions of which can form water-insoluble sulphides and mercaptides.

The invention includes apparatus suitable for use in scavenging a substance present in dissolved form in an aqeueous liquid. Apparatus according to the invention suitable for use in scavenging a substance present in dissolved form in an aqueous liquid comprises means holding a quantity of scavenging agent for forming a water-insoluble reaction product with said substance when contacted therewith, a flow passage via which a said liquid can be conducted to said scavenging agent, and pumping means for pumping liquid along such passage, characterised in that said scavenging agent forms or is distributed along at least one self-sustaining or supported layer called "scavenging layer" and the apparatus is constructed to provide one or more flow passages for conducting liquid along at least one surface of such layer. Such apparatus can incorporate any of the relevant apparatus features hereinbefore referred to in describing processes according to the invention.

A particular form of apparatus according to the invention is shown in the accompanying diagrammatic drawing, which will now be referred to.

The illustrated apparatus comprises a collecting tank 1 for collecting fixing liquid that has been used in the fixing of developed photographic silver halide emulsion materials. The tank 1 has a feed line 2 and an overflow drain 3 connected to the fixing tank (not shown)

GV 1348

in the photographic processing apparatus. The fixing liquid is fed into two distributor tanks 4 and 5 through their respective feed lines 6 and 7 which are fitted with valves 8 and 9. The contents of the tanks 4 and 5 are alternately fed into the column 12 by the pumps 10 and 11 respectively. In the column 12 (shown in cross-section) there is a spirally wound scavenging element, comprising a substrate composed of a resin and a scavenging layer on each side of such substrate, such scavenging layers being gelatin layers containing dispersed zinc sulphide particles. The spirally wound element is held between porous plates 20 and 21. The fixing liquid is recycled several times through the column 12. Valves 14 and 15 are opened and closed alternately in coincidence with the alternate operations of the pumps 10,11 so that at any one time the distributor tank 4 or 5 is in closed circuit communication with the column 12. After a sufficient removal of silver ions from the fixing liquid in the form of water-insoluble silver sulphide which is retained in the gelatin coating, the distributor tank involved is emptied via the drain line 18 or 19 by opening the associated valve 16 or 17. The lines 18 and 19 are connected to the fixing tank of the photographic processing apparatus.

Alternatively, the treatment of wash water may proceed by directly feeding wash water from a collector tank through the column and draining off the treated water to the sewer.

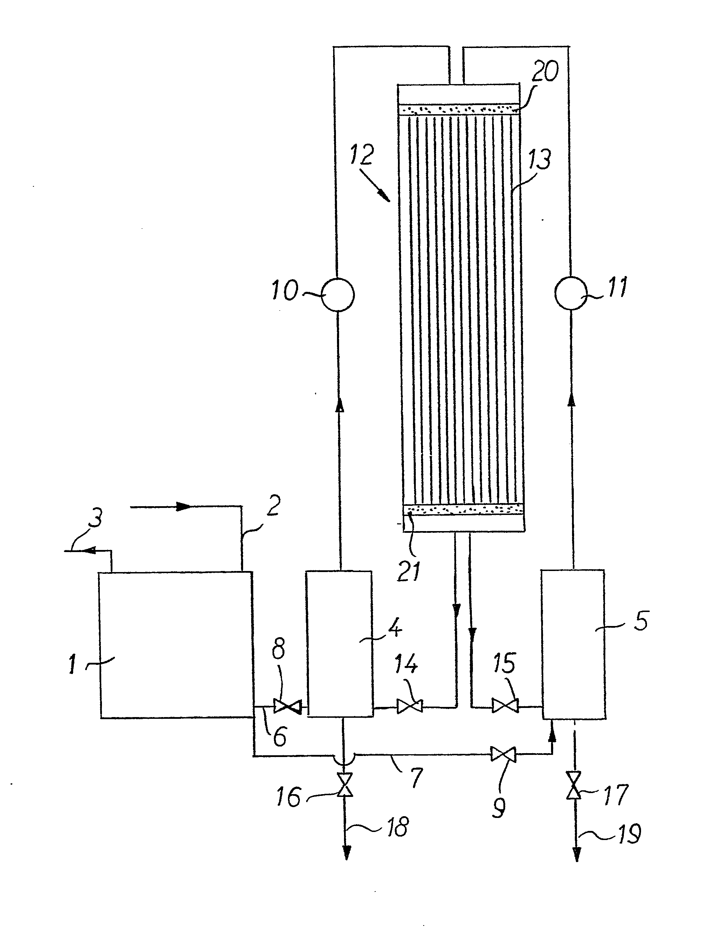

According to a particular embodiment the wash-water before entering the column is pre-treated to effect removal of a substantial proportion of silver ions by feeding the wash-water into a separate tank (not shown in the drawing) wherein ion-echange resin pellets having the property of chemically binding silver ions are kept in motion, e.g. by a stirring mechanism or by pressurised air bubbling through the liquid. The pellets are retained in the tank by a suitable sieve which allows only the liquid to enter the column 12.

The invention is illustrated by but is not limited to the following examples. All ratios and percentages are by weight unless otherwise stated.

<div align="center">EXAMPLE 1</div>

Onto a subbed polyethylene terephthalate sheet having a thickness of 100 micrometer silver ion scavenging layers were applied by double-side

GV 1348

0202364

coating thereto a composition containing 4 g of zinc sulphide of average grain size 1 micrometer dispersed in a 30 % aqueous colloidal silica solution of which the silica particles have an average particle size of 0.025 micrometer. The silica particles were applied at a pH of 5.5 at which a gelled binder stucture on drying was obtained. The zinc sulphide was applied at a coverage of 4 g per m2.

Onto the thus obtained sheet having a length of 35 m and a width of 0.4 m spacer strips of commercially available adhesive resin tape (thickness 0.1 mm) were applied before giving the sheet a coiled structure. In coiled form the sheet was inserted into a laboratory test column having a diameter of 0.24 m and height of 0.45 m.

Tap water after having been used to rinse developed photographic silver halide emulsion materials emerging from a common acidic fixing bath on the basis of sodium thiosulphate and having at the outlet of the wash tank a silver ion concentration of 5 mg per liter was circulated with a pump (at a flow rate of 0.5 liter per minute) through four of said columns arranged in series. After 80 minutes of total contact with the scavenging sheets in said columns the silver ion concentration was reduced to 0.05 mg per liter; so well below the Belgian state regulations for silver emission in the environment, which is set at 0.1 mg per liter. The Belgian State regulations for zinc are 5 mg per liter.

The thus treated wash water could be recycled reducing thereby considerably the waste water loads of the sewer.

EXAMPLE 2

Example 1 was repeated with the difference, however, that the zinc sulphide was incorporated in a gelatin binder layer containing 5 g of gelatin and 4 g of zinc sulphide per m2. To the coating composition of said layer 0.2 ml of an aqueous 30 % by weight formaldehyde solution per 5 g of gelatin was added to reduce the watersolubility of the gelatin layer without impairing its waterpermeability.

The silver ion scavenging capacity was half of that obtained in example 1.

EXAMPLE 3

Example 1 was repeated with the difference, however, that the rinsing liquid was replaced respectively by an aqueous solution of gold (I) ions,

GV 1348

lead (II) ions and mercury (II) ions in a concentration as mentioned in the following table, wherein also the concentrations left after the cited contact time for scavenging are given.

TABLE

| Ion | Concentration in mg/l before scavenging | Concentration in mg/l after scavenging |
|---|---|---|
| $Au^+$ | 1.2 | lower than 0.1 |
| $Pb^{++}$ | 8.8 | lower than 0.5 |
| $Hg^{++}$ | 3.8 | 0.06 |

GV 1348

CLAIMS

1. A process for removing a substance from an aqueous liquid in which it is present in dissolved form, by flowing such liquid in contact with a scavenging agent with which said substance forms a water-insoluble reaction product, characterised in that there is provided at least one element consisting of or comprising at least one self-sustaining or supported layer called "scavenging layer" along which said scavenging agent is distributed, and said liquid is caused to stream along at least one surface of such layer.

2. A process according to claim 1, wherein use is made of at least one said element comprising a said scavenging layer carried by a supporting substrate in the form of a sheet, web or screen.

3. A process according to claim 2, wherein said supporting substrate is composed of resin, fabric or paper optionally pre-coated with a water-impermeable coating.

4. A process according to any preceding claim, wherein use is made of at least one said scavenging layer comprising a water-permeable binder in which scavenging agent is distributed.

5. A process according to claim 4, wherein said binder comprises hydrated silica, regenerated cellulose, hydrolysed cellulose triacetate, cellulose ether phthalate, gelatin or polyvinyl alcohol optionally mixed with copolymer latex particles including hydrophilic recurring units.

6. A process according to any preceding claim, wherein use is made of at least one said element comprising at least one said scavenging layer wherein the scavenging agent is in granular or powder form and is secured to  substrate by means of a water-resistant bonding agent.

7. A process according to any preceding claim, wherein use is made of at least one said element comprising two said scavenging layers which are carried on opposite sides of a supporting substrate and liquid is caused to stream along the exposed surfaces of both such scavenging

GV 1348

layers.

8. A process according to any preceding claim, wherein use is made of at least one said element comprising at least one said scavenging layer which is carried by a supporting screen, and such scavenging layer(s) is (are) washed off said screen with hot water under pressure after such layer(s) has (have) become loaded with scavenged ions.

9. A process according to any preceding claim, wherein said substance removed from the aqueous liquid is a heavy metal having an atomic weight above 55.

10. A process according to claim 9, wherein said heavy metal is silver.

11. A process according to claim 10, wherein use is made of at least one said element comprising a supporting substrate carrying at least one said scavenging layer containing a silver-ion scavenging agent in an amount providing a silver ion scavenging capacity of at least 0.1 g per m2.

12. A process according to claim 10 or 11, wherein said aqueous liquid contains dissolved silver halide and derives from a fixing or rinsing station of a photographic processing machine.

13. A process according to claim 12, wherein the aqueous liquid is caused to flow from a photographic fixing or rinsing station, along said scavenging layer(s) and back to said fixing or rinsing station.

14. A process according to any preceding claim, wherein said scavenging agent is an inorganic sulphide, polysulphide, selenide or polyselenide having a lower solubility product than silver chloride in water in the temperature range of 5 to 25°C. but having a higher solubility product than silver sulphide in water in said temperature range.

15. A process according to claim 14, wherein said scavenging agent is zinc sulphide.

16. A process according to any of claims 1 to 13, wherein said scavenging agent is a hydrophilic but water-insoluble non-diffusing polymer containing thiol or thiourea groups.

17. A process according to claim 16, wherein said scavenging agent is a polyvinyl mercapto-acetate or phenylthiourea resin.

18. A process according to any preceding claim, wherein said element or elements is or are arranged to define a flow layer passageway or passageways along which said aqueous liquid streams in contact with said scavenging layer(s).

19. A process according to claim 18, wherein said passageways(s) is or are not shallower than 0.1 mm.

20. A process according to claim 18 or 19, wherein there is a said element which forms a spiral with spaced convolutions and the aqueous liquid flows along a passageway or passageways between such convolutions.

21. Apparatus suitable for use in scavenging a substance present in dissolved form in an aqueous liquid, said apparatus comprising means holding a quantity of scavenging agent for forming a water-insoluble reaction product with said substance when contacted therewith, a flow passage via which a said liquid can be conducted to said scavenging agent, and pumping means for pumping liquid along such passage, characterised in that said scavenging agent forms or is distributed along at least one self-sustaining or supported layer called "scavenging layer" and the apparatus is constructed to provide one or more flow passages for conducting liquid along at least one surface of such layer.

GV 1348

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 043 759 (EASTMAN KODAK CO.)  * Claims; examples * | 1-7,9 15,18 21 | B 01 J 20/28 C 22 B 3/00 C 02 F 1/28 B 01 J 47/00 |
| X | EP-A-0 043 325 (EASTMAN KODAK CO.)  * Claims; examples * | 1-7,9 15,18 21 | |
| A | US-A-3 317 312 (K.A. KRAUS)  * Claims; examples * | 1-7,9 15,18 21 | |
| A | EP-A-0 113 454 (AMERICAN CYANAMID CO.)  * Claims * | 1-7,9 15,18 21 | TECHNICAL FIELDS SEARCHED (Int. Cl.4) |
| A | US-A-4 410 665 (L. MANZIEK)  * Column 3, alinea 3 * | 8 | C 22 B B 01 J C 02 F |
| A | US-A-4 457 495 (W. EDER)  * Claims * | 21 | |
| A | US-A-3 347 968 (R. THOMAS) | | |
| A | US-A-4 026 796 (H. WEGMÜLLER) | | |

--- -/-

The present search report has been drawn up for all claims

| Place of search | Date of completion of the search | Examiner |
|---|---|---|
| THE HAGUE | 24-01-1986 | JACOBS J.J.E.G. |

## European Patent Office

## EUROPEAN SEARCH REPORT

| DOCUMENTS CONSIDERED TO BE RELEVANT | | Page 2 | |

| Category | Citation of document with indication, where appropriate, of relevant passages | Relevant to claim | CLASSIFICATION OF THE APPLICATION (Int. Cl.4) |
|---|---|---|---|
| A | US-A-4 166 032 (J.E. HANWAY) | | |
| A | US-A-4 220 726 (A. WARSHAWSKY) | | |
| A | US-A-4 332 916 (B.P. THILL) | | |
| A | US-A-4 474 896 (C.C. CHAO) | | |

TECHNICAL FIELDS SEARCHED (Int. Cl.4)

The present search report has been drawn up for all claims

| Place of search | Date of completion of the search | Examiner |
|---|---|---|
| THE HAGUE | 24-01-1986 | JACOBS J.J.E.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82